# EUROPEAN PATENT SPECIFICATION

(11) **EP 0 528 079 B1**
(45) Date of publication and mention of the grant of the patent: **30.03.1994**
(21) Application number: 91307003.3
(22) Date of filing: 30.07.1991
(51) Int. Cl.: F16L 19/10

(54) **Connector for smooth pipe ends and method of connection**
Verbindungsstück für glatte Rohrenden und Verbindungsverfahren
Raccord pour embouts lisses et procédé de raccordement

(43) Date of publication of application: 24.02.1993
(73) Proprietor: Aeroquip AG, CH-4051 Basel (CH)
(72) Inventor: Dewitt, Paul R., Van Wert, Ohio 45891 (US); Flickinger, Steven C., Convoy, Ohio 45832 (US); Stuerzenberger, Dennis J., Monroeville, Indiana 46773 (US)
(74) Representative: Senior, Alan Murray

(56) References cited:
- DD-A- 90 025
- DE-C- 869 582
- DE-C- 901 481
- DE-C- 956 554
- US-A- 2 523 135
- US-A- 2 737 403
- US-A- 2 807 481
- US-A- 3 109 673
- US-A- 4 529 231

## Description

A tube connector for sealing a flareless tube to a fitting having a flat sealing face perpendicular to the fitting axis. The tube connector incorporates a ferrule engaged by a sleeve mounted on the end of the tube and having a flat radial surface for engaging the fitting sealing face. The ferrule is deformable and establishes a primary wedge type metal-to-metal sealing engagement with the tube by a compression nut threaded upon the fitting. The ferrule radially bows under axial and radial compression and this deformation suppresses vibration while the shape of the ferrule end engaged by the nut increases the radial forces on the ferrule as the nut is tightened to provide firm tube support remote from the seal region. The sleeve is provided with an internal undercut adapted to outwardly flare the end of the tube to lock the tube to the sleeve, and radially support the tube end as the tube is compressed during connection.

Flareless tubes are commonly connected to a tubular fitting body by a nut and ferrule type tube connector assembly wherein a ferrule is placed over the end of a tube, and the ferrule is provided with a sealing face having a configuration adapted to conform to a sealing face defined upon the fitting body to establish a sealing relationship therewith. Often, the ferrule is provided with a deformable portion having an internal edge or serrations adapted to be deformed inwardly into engagement with the associated tube by tightening of a compression nut on the fitting body so as to produce a metal-to-metal sealing relationship with the tube and prevent the tube from axially separating from the fitting such as shown in U.S. Patent 3,109,673 and U.S. Patent 4,529,231.

Tube connectors of the flareless types are often employed with tubes formed of various materials and hardness, and as the sealing and axial force resistance between the tube and tube connector is dependent upon the engagement of the ferrule with the tube, when connecting tubes of relatively hard materials or nonuniform surfaces, a fluid tight assembly is not always obtained. Even if a fluid tight assembly is initially established, leakage may occur during normal operation due to tubing vibration and deflection if the primary engagement between the ferrule and tube is located adjacent the primary sealing region. Some tube connectors have utilized constructions which have improved the overall performance of the connector, but the results are still less than satisfactory and often the constructions require expensive manufacturing processes.

In U.S. Patent 2,523,135 a tube connector is shown utilizing a double ferrule arrangement wherein one of the ferrules is deformed into a wedge type metal-to-metal sealing engagement with the associated tube. This wedge type of engagement has an advantage over tube connectors employing ferrules which utilize a cutting edge or serrations because a larger contact area is created between the tube and ferrule which produces a more effective seal and provides frictional forces capable of establishing an effective grip on the tube. The outer ferrule has a conical sealing face which establishes a sealing engagement with a conical sealing face defined on the fitting body, and this requires time consuming and expensive machining processes. Also, the end of the tube is not received in a supportive relationship with the ferrule which would provide additional vibration resistance.

In U.S. Patent 2,737,403 a double ferrule arrangement is utilized wherein the end of the tube is received in a sealing engagement with a circumferential undercut defined in one of the ferrules while the other ferrule establishes a sealing engagement with the outer surface of the tube so as to provide a double seal. The undercut portion flares the end of the tube outwardly to create a seal against the ferrule. However, the ferrule which engages the tube outer surface and the nut utilize a perpendicular contact relationship which does not resist vibration loading, and the construction includes abutment shoulders defined on the ferrule and nut which engage to limit nut tightening so if leakage occurs during operation further tightening cannot be accomplished to stop the leakage. Also, the sealing face of the ferrule which engages the fitting body sealing face is of a conical configuration and this requires accurate machining which would not be necessary if the sealing faces were flat.

It is an object of the invention to provide an improved tube connector of the nut and ferrule type for connecting a flareless tube to a fitting body having a flat sealing face wherein the tube connector is relatively inexpensive to manufacture, simple and efficient to use, dependable in operation and is capable of being utilised with a wide range of tubing materials of various hardness.

A further object of the invention is to provide a flareless tube connector employing a sleeve and ferrule wherein a cam surface defined on the sleeve compresses and contracts the ferrule upon the tube, and the sleeve is of such configuration as to permit limited sleeve expansion and radial deformation during ferrule compression to provide a radial biasing pressure on the ferrule.

US-A-2 807 481 discloses a connector in accordance with the prior art portion of claim 1 and a method of attaching a flareless tube end region in accordance with the prior art portion of claim 5. The present invention is directed at providing an improved connector and method of connection which will function more easily than the prior connector, in particular being especially resistant to vibration whilst being easier to tighten into operative relationship.

The present invention, as defined in claims 1 and 5 utilises arcuately convex surfaces on an external abutment end surface of the ferrule to provide at all times a line contact between a conical interior surface of the nut to provide a radially inward force on the ferrule without increasing the frictional resistance to tightening of the nut as would be obtained from surface-to-surface contact. Additionally, because of the use of a tapered surface on the ferrule engageable by the tapered surface of the sleeve following bowing the ferrule to bring it into surface contact with the sleeve, further tightening of the connector will cause resilient deformation of the rear portion of the sleeve providing additional resistance to the effects of vibration by maintaining an inward force on the ferrule.

In the later illustrated embodiments, the connector utilises a ferrule and sleeve arrangement wherein the sleeve is provided internally with a circumferential undercut for outwardly flaring the end of the tube and establishing a supporting and locking relationship therewith while the ferrule establishes a wedge type metal-to-metal sealing engagement with the outer surface of the tube so as to provide a double seal.

In practice of the invention, as later described in detail, a fitting body includes a flat radial face having an annular recess defined thereon receiving an elastomeric "O" ring having a greater normal axial dimension than the depth of the recess. The fitting body is externally threaded adjacent its end, and the fitting body may be soldered or threaded upon a tube or other conduit system connection, or otherwise permanently affixed to the conduit system.

A sleeve placed upon the end of a metal tube includes an internal undercut portion adapted to receive and outwardly flange the end of the tube, and the sleeve includes a flat radial surface for engaging the fitting body sealing face and the "O" ring. The sleeve also includes an inner annular conical cam surface adapted to overlie and engage a ferrule and a tapered outer surface to provide clearance for radial expansion. The sleeve includes a cantilevered end which is radially deformed outwardly as the ferrule is compressed which maintains a radial biasing force on the ferrule.

The ferrule is provided with an inner diameter slightly greater than the diameter of the tube, and includes a rear portion and a front portion extending toward the fitting body. A tapered outer surface defined on ferrule is adapted to engage the differently angled sleeve cam surface to deform the front portion of the ferrule into a wedge type metal-to-metal sealing engagement with the tube by a compression nut threaded on the fitting body. The tapered surface of the ferrule is of significantly lesser angle than the sleeve's inner cam surface, causing the ferrule to bow inwardly during assembly. This bowing action creates a compression force within the fitting that absorbs vibration and causes the ferrule to firmly support the tube at a location which is remote from the location of the primary sealing. The nut includes an internal annular conical cam surface which engages a convex abutment surface defined on the ferrule adjacent the rear portion of the ferrule upon rotation of the nut in the tightening direction to force the ferrule axially forwardly and radially inwardly, and engage the ferrule outer surface and sleeve cam surface. This wedge type engagement jams the end of the tube axially forwardly into the sleeve undercut portion flaring the end of the tube outwardly and establishing a locked connection between the tube and sleeve preventing collapse of the tube end. The internal cam surface of the nut also forces the rear portion of the ferrule inwardly into the tube to bow the ferrule which assists in vibration dampening and forces the ferrule rear end into firm contact with the tube for support of the tube at an axial location remote from the ferrule front end where primary sealing is occurring making the connector less susceptible to leakage during operation.

Because the construction utilizes a wedge type sealing engagement with the tube, the tube connector is capable of being employed with a wide range of tubing materials of various hardness.

The aforementioned objects and advantages of the invention will be appreciated from the following description and accompanying drawings wherein:
- FIG. 1: is an elevational view, diametrically sectioned, illustrating a flat-face seal tube connector in accord with the invention after initial assembly, but prior to tightening of the compression nut,
- FIG. 2: is a view similar to that of FIG. 1 illustrating the relationship of the components after rotation of the nut toward the fully assembled position, and
- FIG. 3: is an elevational sectional view similar to FIGS. 1 and 2 illustrating the connector in its fully assembled position.
- FIG. 4: is an enlarged sectional detail view of the sleeve end, ferrule and nut cam surface illustrating the relationship of FIG. 2 prior to compression and axially displacement of the ferrule and illustrating the use of an optional seal ring between the sleeve and tube,
- FIG. 5: is an enlarged sectional detail view of the sleeve end, ferrule and nut cam surface illustrating the relationship of FIG. 3 wherein the ferrule is fully compressed, the optional sealing ring also being illustrated in a compressed condition,
- FIG. 6: is an enlarged elevational view of a ferrule having an orientation groove defined therein,
- FIG. 7: is a half sectional view of the ferrule of FIG. 6 taken along section 7-7 of FIG. 6, and

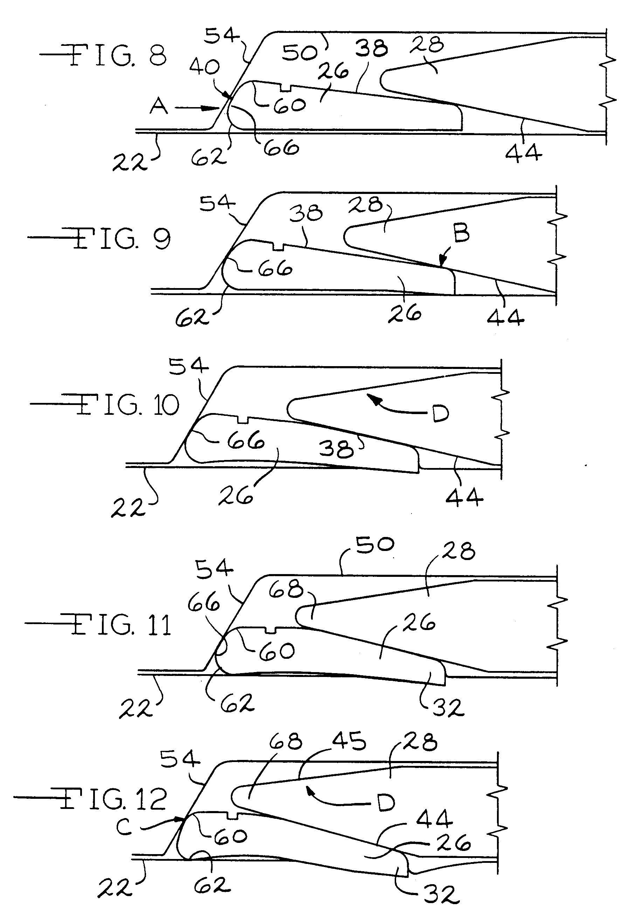

- FIGS. 8 - 12: are enlarged, schematic line views of the sleeve end, ferrule and nut cam surface illustrating the relationship of these components during various stages of the assembly; FIG. 8 illustrating the components at one-half of a revolution of the compression nut prior to a "hand tight" nut rotation; FIG. 9 illustrating the components at a "hand tight" nut position; FIG. 10 showing the components one-half of a nut revolution beyond that shown in FIG. 9; FIG. 11 representing the components one full nut revolution past the "hand tight" relationship of FIG. 9, and FIG. 12 illustrating the configuration of the components one and one-half revolutions past the "hand tight" relationship shown in FIG. 9.

The components of the invention will be appreciated from the drawing figures. The basic component is the annular fitting body 10, partially shown, which is axially bored at 12. The bore 12 intersects an outer end 14 which is planar in configuration and is perpendicularly related to the axis of the fitting body. An annular recess 16 is concentrically defined within the end 14 and receives an elastomeric "O" ring 18 of a normal diameter greater than the axial depth of the recess 16 wherein upon assembly of the "O" ring into the recess a portion of the ring will axially extend beyond the plane of the fitting body end 14. The fitting 10 is provided with external threads at 20 adjacent the end 14, and the other end of the fitting, not shown, is adapted to receive a conduit having a bore in coaxial communication with the bore 12.

A tube 22 is to be connected to the fitting body 10, and the tube is of a cylindrical configuration including a squared end 24. A deformable ferrule 26 is mounted over the end of the tube 24, and an annular sleeve 28 is mounted upon the tube end. A nut 30 is placed over the tube end prior to the assembly of the ferrule and sleeve thereon.

The ferrule 26 is of an annular form, usually constructed of a material having a hardness greater than that of the tube 22, and the ferrule includes a front portion 32 and a rear portion 34. Internally, the ferrule 26 is provided with a bore 36 having a diameter slightly greater than the diameter of the tube 22. Externally, the ferrule 26 is provided with an annular tapered outer surface 38 extending from a largest diameter adjacent the rear portion 34 to a smallest diameter adjacent the front portion 32, and a convex abutment surface 40 is defined at the terminal rear of the ferrule adapted to engage the nut 30 as later described in detail. Orientation means are preferably formed on the exterior of the ferrule as described below.

The sleeve 28, like the ferrule 26, is usually constructed of a material having a hardness greater than that of the tube 22. The forward end of the sleeve is provided with a flat sealing face 42 located within a plane perpendicular to the sleeve axis and adapted to align with the fitting flat end 14 and engage the "O" ring 18 to establish a fluid tight seal therebetween. The rearward end of the sleeve is provided with an internal annular tapered cam surface 44 adapted to overlie and engage the surface 38 of the ferrule 26, and the sleeve outer surface 45 is conical and converges toward the sleeve free end. The rearward end of the sleeve is unsupported and comprises a cantilever for imposing a biasing force on the ferrule as later described. The sleeve 28 is also provided with an internal circumferential undercut 46 adapted to closely receive the end of the tube 22. The undercut 46 provides a forwardly outwardly extending conical surface which flares the end of the tube 24 outwardly and establishes a mechanical lock between the sleeve and tube and supports the tube end.

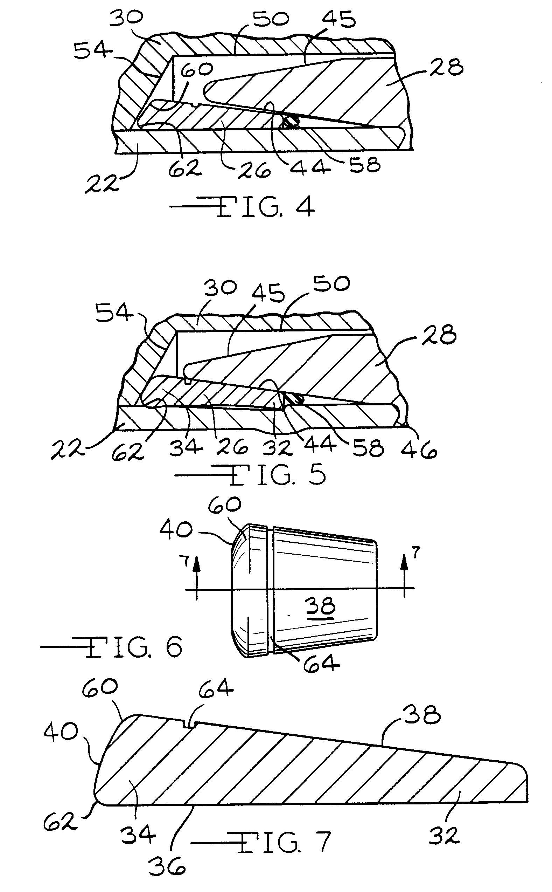

As will be apparent from FIGS. 2, 4, 8 and 9 the angle of the ferrule conical surface 38 with respect to its axis is several degrees less than the angle of the sleeve conical surface 44.

The nut 30 is internally threaded at 48 for threadedly mounting the nut to the fitting threads 20, and the nut is provided with a maximum diameter bore indicated at 50 of a sufficient dimension to receive the tube 22 and surround the ferrule 26 and sleeve 28. The nut 30 is also provided with a radially inwardly extending shoulder 52 defining an annular conical cam surface 54 adapted to engage the ferrule surface 40, and the inner diameter of the shoulder, as indicated at 56, is slightly greater than the diameter of the tube 22. The diameters of the ferrule at 36, the nut at 56 and the cylindrical sleeve surface intersected by surface 44 are the same. Externally, the nut 30 includes wrench engaging flats, not shown, whereon a wrench, or the like, may be applied for threading the nut on the fitting threads 20.

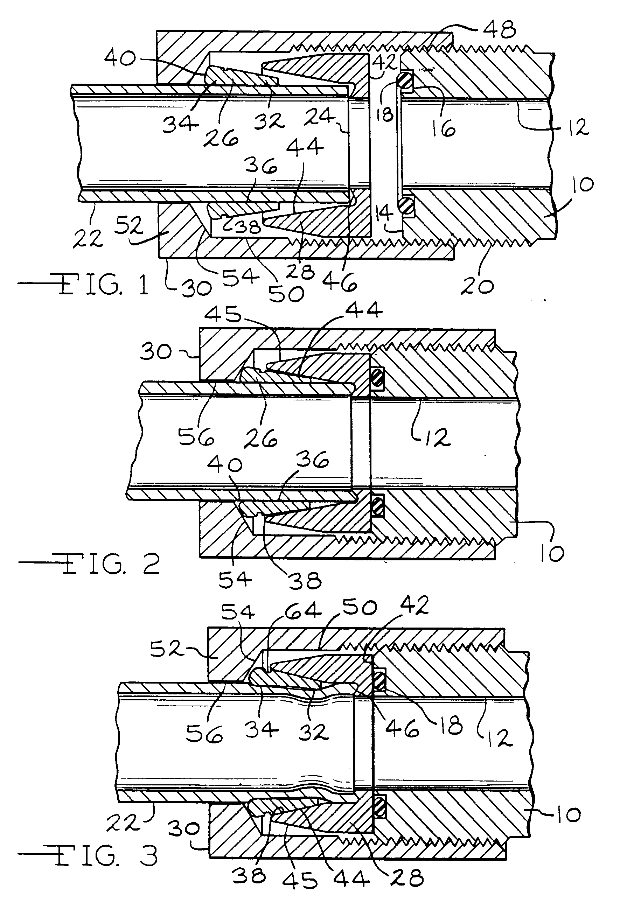

In assembly, the nut 30 is first inserted over the end of the tube 22, and the ferrule is slipped upon the end of the tube such that the ferrule's surface 40 opposes the nut's cam surface 54. Thereupon, the sleeve 28 is placed over the forward end of the tube 22 until the end is aligned with the undercut 46, and the nut 30 is preliminarily threaded upon the fitting body threads 20, as represented in FIG. 1.

Proper assembly of the connector is accomplished by a predetermined number of revolutions of the compression nut 30 and as the nut 30 is tightened, translating the nut to the right of FIGS. 1-3, the nut cam surface 54 engages the ferrule surface 40 thereby forcing the ferrule axially forwardly causing the ferrule abutment surface 38 to engage the sleeve cam surface 44. As the ferrule 26 moves forwardly, the front portion 32 of the ferrule 26 begins to deform inwardly into the tube 22 due to the configuration of the engaging surfaces and thereby force the tube and sleeve 28 forwardly engaging the sleeve sealing face 42 in a sealing relationship with the fitting body sealing face 14 and "O" ring 18, FIG. 2. Continued tightening of the nut 30 forces the ferrule 26 further forwardly deforming the front portion 32 of the ferrule 26 inwardly into a wedge type metal-to-metal sealing engagement with the tube 22, forming the primary seal between the tube and connector, and jamming the forward end of the tube into tight engagement with the undercut 46 and the annular recess defined by the undercut. The rear portion 34 of the ferrule 26 is also deformed inwardly into the tube 22 due to the configuration of the ferrule abutment surface 40, as later described, to cause the ferrule to bow, FIG. 3, and thereby provide assistance in vibration dampening. Tightening of the nut 30 will be discontinued upon the predetermined number of nut rotations occurring, and at this point a fluid tight assembly is established.

Depending on the hardness and wall thickness of the tubing material with which the tube 22 is formed, the end of the tube 22 will be flared outwardly by the undercut 46 while the wedge type engagement of the ferrule 26 with the tube will deform the tube inwardly as illustrated in FIGS. 3 and 5. This flaring and deforming of the tube provides strong resistance to axial forces imposed on the tube tending to separate the tube 22 from the fitting body 10. However, even if only slight deformation or flaring occurs, such as when connecting tubes of relatively hard materials like stainless steel, the ferrule 26 still provides significant frictional forces on the tube 22 due to the wedge type engagement to maintain the tube connected to the fitting body 10, and even if the tube is of a nonuniform surface, effective sealing will still be established to provide a fluid tight assembly.

Several advantages are derived from the tight jamming of the end of the tube 22 into the undercut 46. First, even though the end of the tube may not be exactly square a fluid-tight seal is usually achieved, however, primary sealing occurs between the tube and ferrule. Secondly, a mechanical locking of the sleeve 28 on the tube end occurs which assures that the sleeve will remain on the tube when the connector is uncoupled. Thirdly, the undercut 46 will support the tube end 24 against radial collapse during tightening of the nut and compression of the ferrule 26 as shown in FIGS. 3 and 5 as the undercut surface innermost portion extends back toward the tube 22.

Sealing is also optionally augmented by installing an O-ring 58 within the sleeve, as shown in FIGS. 4 and 5, prior to the ferrule entering the sleeve, and upon the connection being completed the O-ring 58 will deform and extrude to tightly seal the tube, ferrule and sleeve relative to each other adjacent ferrule end 32, FIG. 5.

In FIGS. 6 and 7 the preferred ferrule construction is shown in detail. A groove 64 encircles the ferrule adjacent the larger diameter end 34 so that the assembler may be able to quickly determine which end of the ferrule should be first inserted over the tube end. The indicia groove 64 is particularly of advantage with small size connectors wherein the ferrule will be relatively small and the larger and smaller diameter ends are difficult to differentiate without the presence of the orientation groove 64.

The outer end 40 of the ferrule 26 consists of an outer gradual radius 60 and a smaller inner radius 62. As the nut cam surface 54 is conical a "line" contact exists between the surfaces 60 and 54 which reduces friction between these engaged surfaces reducing the torque necessary to rotate nut 30 and preventing rotation of the ferrule as the nut rotates. The radius 62 eliminates stress points in the tube as the ferrule end 34 is pushed into the tube.

To best understand the interrelationship of the tube 22, sleeve 28, ferrule 26 and compression nut surface 54 during tightening of the compression nut 30 reference is made to FIGS. 8 - 12 wherein these components are illustrated in a schematic line drawing manner for purpose of illustration.

In FIG. 8 the relationship of components is that which exists when the compression nut 30 is one-half of a revolution prior to a "hand tight" condition. In this situation the nut surface 54 will be engaging the abutment end 40 of ferrule 26 and the nose of the ferrule will have initially engaged the sleeve surface 44. As the ferrule surface 66 is only slightly convex and substantially parallel to the nut surface 54 the force being applied to the ferrule 26 is in the axial direction as indicated by arrow A, and sufficient force has not been exerted on the ferrule by the nut to deform the ferrule.

FIG. 9 illustrates the "hand tight" relationship wherein the nut 30 has been tightened by hand and the movement of the ferrule is substantially axial to the right as the surface 54 will be engaging the ferrule surface 66. The nose of the ferrule engages the sleeve surface 44 and a substantially radial force inwardly is imposed on the nose of the ferrule by the sleeve surface 44 as indicated by arrow B. As it will be appreciated from FIG. 9 the force B deforms the nose of the ferrule into engagement with the tube surface.

FIG. 10 illustrates the relationship of the components approximately one-half of a nut revolution past the "hand tight" relationship of FIG. 9 in the nut tightening direction. Under these conditions the force B has inwardly deformed the nose of the ferrule into the material of the tube, and the ferrule has moved to the right to such an extent that the sleeve surface 44 and the ferrule surface 38 are now substantially parallel and contiguous throughout their engagement. The nose region of the ferrule has been forced inwardly into a deeper penetration of the tube and the primary metal-to-metal sealing relationship between the ferrule and the tube is now occurring.

In FIG. 11 the components are illustrated under that condition wherein the compression nut has been rotated one full revolution past the "hand tight" condition of FIG. 9. The nose region 32 of the ferrule is imbedded deeper into the tube in view of the inward force imposed upon the ferrule by the sleeve surface 44, and the ferrule is beginning to assume a "bowed" configuration due to the high axial forces being imposed thereon. The nut cam surface 54 is now beginning to engage the ferrule convex radius 60, and the force vector between the surfaces 54 and 60 now has a radial component which causes the ferrule radius 62 to engage the surface of the tube 22 as will be appreciated from FIG. 11.

In FIG. 12 a full tight condition is shown wherein the nut has been rotated approximately one and one-half revolutions past the "hand tight" condition of FIG. 9. Under these conditions the axial forces on the ferrule are high, the ferrule nose has been imbedded deeply into the tube 22 to achieve effective sealing, and the ferrule 26 has been significantly bowed wherein the nut surface 54 engages the ferrule radius 60 such that the force vector as represented by arrow C will have a significant radial component. This radial compression of the outer end of the ferrule engaged by the surface 54 causes the outer end of the ferrule to slightly imbed into the tube 22 at the surface 62 and a firm mechanical interconnection between the ferrule and the tube will occur at the surface 62. The firm mechanical connection of the ferrule to the tube at surface 62 provides a strong support of the tube relative to the connector at a location significantly axially spaced from the primary metal-to-metal seal occurring at the ferrule nose region 32. Thus, flexing and vibration occurring in the tube is absorbed at the ferrule radius 62 and not transmitted to the nose end of the ferrule where sealing is occurring. Accordingly, a connector utilizing the inventive concepts is able to withstand significant vibration without leakage.

Additionally, the bowed configuration of the ferrule 26 as is apparent from FIG. 12 permits the connector to absorb vibration without a loss of sealing efficiency in that the bowed configuration has an inherent resiliency. This aspect of the invention is augmented by the cantilevered construction of the sleeve wherein the sleeve outer end 68 is capable of deforming outwardly in a resilient manner due to the forces being imposed on the ferrule by the sleeve. This outward deformation is represented in FIGS. 10 and 12 by the arrow D. The inherent resiliency of the cantilevered end of the sleeve will maintain a strong biasing force on the ferrule in an inward radial direction further resisting any tendency for the connector to leak even though vibrations may be imposed thereon.

The presence of the sleeve tapered outer surface 45 permits the cantilevered outer sleeve end 68 to deflect outwardly during ferrule compression without engaging the nut bore 50 and the reduced wall thickness of the outer end of the sleeve 28 resulting from surfaces 44 and 45 permits the sleeve to deflect outwardly during compression of the ferrule for maintaining the biasing compression force on the ferrule described above.

## Claims

1. A connector for attaching a cylindrical flareless tube (22) having an end (24) and an end region to a tubular fitting (10) having an axis, an externally threaded portion (20) and a sealing face (14), the connector comprising a sleeve (28) having an axis adapted to be placed over the end region of the tube, said sleeve including a rearward facing end and a forward facing end defining a sealing face (42) adapted to be located in an opposed axially aligned relationship to the fitting sealing face (14), said sleeve including an interior conical surface (44) intersecting said rearward facing end converging in the direction of said sleeve forward facing end, a ferrule (26) having a front portion (32), a rear portion (34) having an external abutment end surface (40), an internal diameter (36) substantially equal to the diameter of the tube (22), and an external surface (38) adapted to engage said sleeve inner conical surface (44) for deforming said ferrule front portion (32) inwardly into a metal-to-metal sealing engagement with the tube's cylindrical surface, said ferrule external abutment end surface (40) comprising an end surface (40/62), a nut (30) surrounding said sleeve (28) and said ferrule (26) having threads (46) adapted to engage the fitting threaded portion (20), said nut (30) having an internal shoulder (52) having a conical surface (54) converging toward the tube (22) and away from said ferrule (26) whereby upon tightening of said nut (30), said nut conical surface (54) engages said ferrule end surface (40/62) forcing said ferrule (26) forwardly into engagement with said sleeve inner conical surface (44) radially to compress said ferrule (26), said ferrule (26) being adapted to be bowed radially outwardly between said ferrule front (32) and rear (34) portions when under axial compression, said ferrule end abutment surface (60) being adapted to engage said nut conical surface (54) upon said ferrule (26) bowing to produce a radially inward force vector forcing said ferrule rear portion (34) into said tube (22), the arrangement being such that tightening of said nut (30) will axially force said ferrule (26) and sleeve (28) forward to bring facing sealing face (42) into sealing relationship with the fitting sealing face (14), characterised in that the external surface (38) of the ferrule (26) is conical, in that the ferrule external abutment surface (60/62) has a radially inner first convex arcuate surface (62) and a radially outer second arcuate convex surface (60) defining an abutment surface outer dimension, the ferrule (26) is formed of an elastically deformable metal, whereby when bowed radially outwardly under axial compression a spring force is produced within said ferrule to reduce vibration loads within said connector, said ferrule second convex abutment surface (60) defining said abutment surface outer dimension engaging the nut conical surface (54) with a line contact and the inner convex surface engaging the tube.

2. A connector as claimed in claim 1, wherein indicia means (64) are defined on said ferrule external conical surface (38) adjacent one of said ferrule portions visually to indicate a predetermined ferrule end portion.

3. A connector as claimed in claim 2, wherein said indicia means (64) comprise an annular groove circumscribing said ferrule exterior conical surface.

4. A connector as claimed in any preceding claim, wherein the angle of convergence of said sleeve inner conical surface (44) is greater than the angle of convergence of said ferrule external conical surface (38) whereby axial compression of said ferrule (26) during tightening of said nut (30) causes said ferrule (26) to axially bow radially outwardly between said ferrule front (32) and rear (34) portions.

5. A method of attaching a flareless tube end region having an axis and cylindrical inner and outer axially spaced portions to a fitting (10) having an annular sleeve (28) circumscribing the tube inner portion, the sleeve (28) including an inwardly facing conical surface (44) radially spaced from the tube inner portion and axially converging at a first angle in a direction away from the tube outer portion, the fitting (10) including a compression nut (30) having an annular conical abutment surface (54) circumscribing the tube outer portion converging away from the tube inner portion and adapted to be axially displaced toward the sleeve (28) upon compression nut rotation, an annular ferrule (26) circumscribing the tube outer portion having an exterior surface (38) and including a front portion (32) received within and engaging the sleeve conical surface (44) and a rear portion (34) engaged by the nut abutment surface (54), the ferrule rear portion (34) including an inclined end surface (62) adapted to be engaged by the nut abutment surface (54), the method comprising the steps of:
(a) axially displacing the compression nut abutment surface (54) toward the sleeve (28) to engage the nut abutment surface (54) with the ferrule end surface (62) and axially to displace the ferrule front portion (32) into engagement with the sleeve conical surface (44),
(b) continuing axial displacement of the compression nut abutment surface (54) toward the sleeve (28) whereby sufficient axial length engagement of the sleeve conical surface (44) and the ferrule exterior surface (38) occurs to cause the ferrule front portion (32) to imbed into the tube inner portion and the ferrule (26) to outwardly bow intermediate its front (32) and rear (34) portions, and
(c) continuing axial displacement of the compression nut abutment surface (54) toward the sleeve (28) to continue outward bowing of the ferrule (26) until the nut abutment surface (54) so engages the ferrule end surface (60) as to produce an inward radial force on the ferrule rear portion (34) to cause the ferrule rear portion (34) tightly to engage and to support the tube outer portion, characterised in that the method is carried out using a connector as defined in claim 1 having the ferrule exterior surface (38) conically converging at a second angle toward the sleeve (28), the second converging angle being less than the first converging angle, the end surface of the ferrule rear portion (34) comprising a radially inward first convex arcuate surface (62) and a radially outward second arcuate convex surface (60) adapted to be sequentially engaged by the nut abutment surface (54) at a contact line, in that in step (a), the compression nut abutment surface engages said ferrule first arcuate surface (62), in that in step (b), the ferrule (26) is outwardly bowed intermediate the front (32) and rear (34) portions due to the difference in the values of the first and second converging angles, and in that in step (c), upon the continuing axial displacement of the compression nut abutment surface (54), the nut abutment surface (54) engages a ferrule second arcuate convex surface (60) with a line contact to produce increased inward radial force on the ferrule rear portion (34).

6. A method as claimed in claim 5, which includes the step of radially inwardly biasing the sleeve (28) upon the ferrule (26) to provide resistance to inadvertent displacement due to vibration.

## Patentansprüche

1. Verbinder, um ein zylindrisches, ein Ende (24) und einen Endabschnitt besitzendes unaufgeweitetes Rohr (22) mit einem rohrförmigen, eine Achse, einen Außengewindeabschnitt (20) und eine Abdichtfläche (14) besitzenden Fitting (10) zu verbinden, wobei der Verbinder eine eine Achse enthaltende Muffe (28), die imstande ist, über den Endabschnitt des Rohres gesetzt zu werden, wobei die besagte Muffe eine rückwärts gerichtete Stirnseite sowie eine vorwärts gerichtete Stirnseite, die eine Abdichtfläche (42) bestimmt, welche imstande ist, in gegenüberliegender, axial fluchtender Lagebeziehung zu der Fitting-Abdichtfläche (14) angeordnet zu werden, enthält und die genannte Muffe eine innere konische Fläche (44) aufweist, die die genannte rückwärts gerichtete Stirnseite schneidet sowie in der Richtung der genannten vorwärts gerichteten Muffen-Stirnseite konvergiert, eine Zwinge (26), die ein Vorderteil (32) und ein Rückteil (34) enthält, welches eine externe Anlagestirnfläche (40), einen im wesentlichen zum Durchmesser des Rohres (22) gleichen Innendurchmesser (36) und eine Außenfläche (38) besitzt, welche imstande ist, an der genannten inneren konischen Muffenfläche (44) in Anlage zu kommen, um das erwähnte Zwingen-Vorderteil (32) einwärts zu einem Metall-an-Metall-Abdichteingriff mit der Zylinderfläche des Rohres zu verformen, wobei die besagte externe Zwingen-Anlagestirnfläche (40) eine Endfläche (40/62) aufweist, und eine die besagte Muffe (28) sowie die besagte Zwinge (26) umgebende Mutter (30) mit Gewinde (48), die imstande ist, mit dem Fitting-Gewindeabschnitt (20) in Eingriff zu kommen, wobei die genannte Mutter (30) eine innere Schulter (52) mit einer konischen, zum-Rohr (22) hin und von der besagten Zwinge (26) weg konvergierende Fläche (54) besitzt, wodurch bei einem Anziehen der genannten Mutter (30) die erwähnte konische Mutterfläche (54) mit der erwähnten Zwingen-Endfläche (40/62) in Anlage gelangt und die besagte Zwinge (26) vorwärts zur Anlage mit der genannten inneren konischen Muffenfläche (44) zwingt, um die besagte Zwinge (26) zu komprimieren, wobei die besagte Zwinge (26) imstande ist, zwischen dem genannten Zwingen-Vorderteil (32) und Zwingen-Rückteil (34), wenn sie unter einer axialen Kompression steht, radial auswärts gekrümmt zu werden, wobei die Zwingen-Anlageendfläche (60) imstande ist, bei einem Krümmen der genannten Zwinge (26) mit der erwähnten konischen Mutterfläche (54) in Anlage zu gelangen, um einen radial einwärts gerichteten Kraftvektor zu erzeugen, der das genannte Zwingen-Rückteil (34) in das besagte Rohr (22) zwingt, umfaßt und wobei die Anordnung derart ist, daß ein Anziehen der genannten Mutter (30) die besagte Zwinge (26) sowie Muffe (28) in axialer Richtung vorwärts drückt, um die stirnseitige Abdichtfläche (42) mit der Fitting-Abdichtfläche (14) in abdichtende Lagebeziehung zu bringen, dadurch gekennzeichnet, daß die Außenfläche (38) der Zwinge (26) konisch ist, daß die externe Zwingen-Endfläche (60/62) eine erste,radial innere, konvex gekrümmte Fläche (62) sowie eine zweite, radial äußere, konvex gekrümmte Fläche (60), welche ein Anlagefläche-Außenmaß bestimmt, besitzt, daß die Zwinge (26) aus einem elastisch verformbaren Metall gebildet ist, wodurch, wenn sie unter einer axialen Kompression radial auswärts gekrümmt wird, eine Federkraft innerhalb der genannten Zwinge erzeugt wird, um Schwingungsbelastungen innerhalb des erwähnten Verbinders zu vermindern, und daß die besagte zweite konvexe Zwingen-Endfläche (60), die das Anlagefläche-Außenmaß bestimmt, mit der konischen Mutterfläche (54) in einer Linienberührung in Anlage ist sowie die innere konvexe Fläche am Rohr anliegt.

2. Verbinder nach Anspruch 1, dadurch gekennzeichnet, daß Anzeigemittel (64) an der besagten äußeren konischen Zwingenfläche (38) nahe einem der Zwingenabschnitte festgelegt sind, um visuell ein vorbestimmtes Zwingen-Endteil zu bezeichnen.

3. Verbinder nach Anspruch 2, dadurch gekennzeichnet, daß die Anzeigemittel (64) eine Ringkehle umfassen, die die besagte äußere konische Zwingenfläche umschreibt.

4. Verbinder nach irgendeinem vorhergehenden Anspruch, dadurch gekennzeichnet, daß der Konvergenzwinkel der genannten inneren konischen Muffenfläche (44) größer ist als der Konvergenzwinkel der genannten äußeren konischen Zwingenfläche (38), wodurch eine axiale Kompression der besagten Zwinge (26) während eines Anziehens der erwähnten Mutter (30) bewirkt, daß sich die besagte Zwinge (26) zwischen dem genannten Zwingen-Vorderteil (32) und Zwingen-Rückteil (34) in axialer Richtung radial auswärts krümmt.

5. Verfahren zum Verbinden eines unaufgeweiteten Rohrendabschnitts, der eine Achse und zylindrische innere sowie äußere, in axialer Richtung beabstandete Teile hat, mit einem Fitting (10), wobei eine ringförmige Muffe (28) eine einwärts gerichtete konische Fläche (44) besitzt, welche vom inneren Teil des Rohres radial beabstandet ist sowie axial unter einem ersten Winkel in einer Richtung vom äußeren Teil des Rohres weg konvergiert, das Fitting (10) eine Kompressionsmutter (30) mit einer ringförmigen konischen, vom inneren Teil des Rohres weg konvergierenden Anlagefläche (54) hat, die den äußeren Teil des Rohres umgibt sowie imstande ist, bei einem Drehen der Kompressionsmutter axial zur Muffe (28) hin verlagert zu werden, und eine ringförmige Zwinge (26), die den äußeren Teil des Rohres umschließt, eine äußere Fläche (38) hat sowie ein Vorderteil (32), das innerhalb der konischen Muffenfläche (44) aufgenommen und mit dieser in Anlage ist, und ein Rückteil (34), das mit der Mutter-Anlagefläche (54) in Anlage ist, besitzt, wobei das Zwingen-Rückteil (34) eine geneigte Endfläche (62) enthält, die imstande ist, von der Mutter-Anlagefläche (54) erfaßt zu werden, das Verfahren umfaßt die Schritte:
(a) axiales Verlagern der Kompressionsmutter-Anlagefläche (54) zur Muffe (28) hin, um die Mutter-Anlagefläche (54) mit der Zwingen-Endfläche (62) in Anlage zu bringen sowie das Zwingen-Vorderteil (32) mit der konischen Muffenfläche (44) in Anlage zu bringen,
(b) Fortsetzen des axialen Verlagerns der Kompressionsmutter-Anlagefläche (54) zur Muffe (28) hin, wodurch eine ausreichende axiale Längenanlage der konischen Muffenfläche (44) und der Zwingen-Außenfläche (38) erfolgt, um das Zwingen-Vorderteil (32) in das innere Rohrteil einzugraben und die Zwinge (26) zwischen ihrem Vorderteil (32) sowie ihrem Rückteil (34) auswärts zu krümmen, und
(c) Fortsetzen des axialen Verlagerns der Kompressionsmutter-Anlagefläche (54) zur Muffe (28) hin, um ein Auswärtskrümmen der Zwinge (26) weiterzuführen, bis die Mutter-Anlagefläche (54) die Zwingen-Endfläche (60) derart erfaßt, um eine einwärtige Radialkraft am Zwingen-Rückteil (34) zu erzeugen, damit ein festes Erfassen des Zwingen-Rückteils (34) und ein Abstützen des äußeren Rohrteils bewirkt wird, dadurch gekennzeichnet, daß das Verfahren unter Verwendung eines im Anspruch 1 definierten Verbinders durchgeführt wird, wobei die Zwingen-Außenfläche (38) konisch unter einem zweiten Winkel zur Muffe (80) hin konvergiert, der zweite Konvergenzwinkel kleiner als der erste Konvergenzwinkel ist, die Endfläche des Zwingen-Rückteils (34) eine erste, radial einwärts konvex gekrümmte Fläche (62) sowie eine zweite, radial auswärts konvex gekrümmte Fläche (60) hat, die eingerichtet sind, um nacheinander von der Mutter-Anlagefläche (54) an einer Berührungslinie erfaßt zu werden, daß im Schritt (a) die Kompressionsmutter-Anlagefläche die genannte erste gekrümmte Zwingenfläche (62) erfaßt, daß im Schritt (b) die Zwinge (26) zwischen dem Vorderteil (32) und dem Rückteil (34) aufgrund des Unterschiedes in den Werten des ersten sowie zweiten Konvergenzwinkels auswärts gekrümmt wird und daß im Schritt (c) bei Fortsetzen des axialen Verlagerns der Kompressionsmutter-Anlagefläche (54) die Mutter-Anlagefläche (54) an einer zweiten, konvex gekrümmten Zwingenfläche (60) in einer Linienberührung zur Anlage gelangt, um eine erhöhte einwärtige Radialkraft am Zwingen-Rückteil (34) zu erzeugen.

6. Verfahren nach Anspruch 5, das den Schritt des radial einwärts gerichteten Belastens der Muffe (28) gegen die Zwinge (26) einschließt, um einen Widerstand gegen ein ungewolltes Verlagern aufgrund von Vibration zu erzeugen.

## Revendications

1. Connecteur pour fixer un tuyau cylindrique sans évasement (22) possédant une extrémité (24) et une région terminale, à un tubulaire (10) possédant un axe, une partie filetée (20) et une face d'étanchéité (14), le connecteur comportant un manchon (28) possédant un axe apte à être placé au-dessus de la région terminale du tuyau, ledit manchon comprenant une extrémité tournée vers l'arrière et une extrémité tournée vers l'avant définissant une face d'étanchéité (42) apte à être disposée d'une manière alignée axialement en regard de la face d'étanchéité (14) du raccord, ledit manchon comprenant une surface conique intérieure (44) entrecoupant ladite extrémité tournée vers l'arrière convergeant dans la direction de ladite extrémité tournée vers l'avant du manchon, un fourreau (26) possédant une partie antérieure (32), une partie postérieure (34) possédant une surface terminale de butée extérieure (40), un diamètre intérieur (36) sensiblement égal au diamètre du tuyau (22), et une surface extérieure (38) apte à venir en contact de ladite surface conique intérieure (44) du manchon pour déformer ladite partie antérieure (32) du fourreau vers l'intérieur en un contact d'étanchéité métal-métal avec la surface cylindrique du tuyau, ladite surface terminale de butée extérieure (40) du fourreau comportant une surface terminale (40/62), un écrou (30) entourant ledit manchon (28) et ledit fourreau (26) possédant des filets (46) aptes à coopérer avec la partie filetée (20) du raccord, ledit écrou (30) possédant un épaulement intérieur (52) possédant une surface conique (54) convergeant vers le tuyau (22) et s'écartant dudit fourreau (26), de telle sorte que, lors du serrage dudit écrou (30), ladite surface conique (54) de l'écrou vient en contact de ladite surface terminale du fourreau (40/62) poussant ledit fourreau (26) vers l'avant en contact avec ladite surface conique intérieure (44) du manchon radialement pour comprimer ledit fourreau (26), ledit fourreau (26) étant apte à être courbé radialement vers l'extérieur entre lesdites parties antérieure (32) et postérieure (34) du fourreau lorsqu'il se trouve sous compression axiale, ladite surface de butée terminale du fourreau (60) étant apte à venir en contact de ladite surface conique de l'écrou (54) après courbure dudit fourreau (26) pour produire un vecteur de force radialement vers l'intérieur poussant ladite partie postérieure (34) du fourreau dans ledit tuyau (22), l'agencement étant tel qu'un serrage dudit écrou (30) poussera axialement ledit fourreau (26) et le manchon (28) vers l'avant pour amener la face d'étanchéité (42) en contact d'étanchéité avec la face d'étanchéité (14) du raccord, caractérisé en ce que la surface extérieure (38) du fourreau (26) est conique, en ce que la surface de butée extérieure (60/62) du fourreau possède une première surface arquée convexe (62) radialement intérieure et une seconde surface arquée convexe (60) radialement extérieure définissant une dimension extérieure de surface de butée, le fourreau (26) est constitué en un métal déformable élastiquement, de telle sorte que lorsqu'il est courbé radialement vers l'extérieur par compression axiale, une force élastique est produite à l'intérieur dudit fourreau pour réduire des charges de vibration à l'intérieur dudit connecteur, ladite seconde surface de butée convexe (60) du fourreau définissant ladite dimension extérieure de la surface de butée venant en contact de la surface conique (54) de l'écrou avec un contact linéaire et la surface convexe intérieure venant en contact du tuyau.

2. Connecteur selon la revendication 1, dans lequel des moyens (64) formant des repères sont définis sur ladite surface conique extérieure (38) du fourreau adjacente à l'une desdites parties du fourreau pour indiquer visuellement une partie terminale prédéterminée du fourreau.

3. Connecteur selon la revendication 2, dans lequel lesdits moyens (64) formant des repères comportent une gorge annulaire circonscrivant ladite surface conique extérieure du fourreau.

4. Connecteur selon l'une quelconque des revendications précédentes, dans lequel l'angle de convergence de ladite surface conique intérieure (44) du manchon est supérieur à l'angle de convergence de ladite surface conique extérieure (38) du fourreau, de telle sorte qu'une compression axiale dudit fourreau (26) durant un serrage dudit écrou (30) provoque une courbure axiale radialement vers l'extérieur dudit fourreau (26) entre lesdites parties antérieure (32) et postérieure (34) du fourreau.

5. Procédé de fixation d'une région terminale d'un tuyau sans évasement, possédant un axe et des parties axialement espacées intérieure et extérieure, à un raccord (10) possédant un manchon annulaire (28) circonscrivant la partie intérieure du tuyau, le manchon (28) comprenant une surface conique tournée vers l'intérieur (44) radialement espacée de la partie intérieure du tuyau et convergeant axialement selon un premier angle dans une direction s'écartant de la partie extérieure du tuyau, le raccord (10) comprenant un écrou de compression (30) possédant une surface de butée conique annulaire (54) circonscrivant la partie extérieure du tuyau s'écartant de la partie intérieure du tuyau et apte à être déplacée axialement vers le manchon (28) lors d'une compression par rotation de l'écrou, un fourreau annulaire (26) circonscrivant la partie extérieure du tuyau possédant une surface extérieure (38) et comprenant une partie antérieure (32) reçue à l'intérieur et venant en contact de la surface conique (44) du manchon et une partie postérieure (34) en contact de la surface de butée (54) de l'écrou, la partie postérieure (34) du fourreau comprenant une surface terminale inclinée (62) apte à venir en contact de la surface de butée (54) de l'écrou, le procédé comportant les étapes consistant à :
(a) déplacer axialement la surface de butée (54) de l'écrou de compression vers le manchon (28) pour mettre en contact la surface de butée (54) de l'écrou avec la surface terminale du fourreau (62) et axialement pour déplacer la partie antérieure (32) du fourreau en contact avec la surface conique du manchon (44),
(b) poursuivre le déplacement axial de la surface de butée de l'écrou de compression (54) vers le manchon (28) de telle sorte qu'un contact longitudinal axial suffisant de la surface conique (44) du manchon et la surface extérieure (38) du fourreau se produit pour amener la partie antérieure (32) du fourreau à être encastrée dans la partie intérieure du tuyau et pour courber vers l'extérieur le fourreau (26) entre ses parties antérieure (32) et postérieure (34), et
(c) poursuivre le déplacement axial de la surface de butée de l'écrou de compression (54) vers le manchon (28) pour poursuivre un courbage vers l'extérieur du fourreau (26) jusqu'à ce que la surface de butée de l'écrou (54) vienne en contact de la surface terminale du fourreau (60) de manière à produire une force radiale vers l'intérieur sur la partie postérieure (34) du fourreau pour amener la partie postérieure (34) du fourreau à venir étroitement en contact et à supporter la partie extérieure du tuyau, caractérisé en ce que le procédé est mis en oeuvre en utilisant un connecteur tel que défini dans la revendication 1 possédant la surface extérieure (38) du fourreau convergeant coniquement selon un second angle vers le manchon (28), le second angle de convergence étant inférieur au premier angle de convergence, la surface terminale de la partie postérieure (34) du fourreau comprenant une première surface arquée convexe radialement intérieure (62) et une seconde surface arquée convexe radialement extérieure (60) aptes à venir séquentiellement en contact de la surface de butée de l'écrou (54) selon un contact linéaire, en ce qu'au cours de l'étape (a), la surface de butée de l'écrou de compression vient en contact de ladite première surface arquée du fourreau (62), en ce qu'au cours de l'étape (b), le fourreau (26) est courbé vers l'extérieur entre les parties antérieure (32) et postérieure (34) par suite de la différence des valeurs des premier et second angles de convergence, et en ce qu'au cours de l'étape (c), lors du déplacement axial poursuivi de la surface de butée d'écrou de compression (54), la surface de butée de l'écrou (54) vient en contact d'une seconde surface convexe arquée du fourreau (60) selon un contact linéaire pour produire une force radiale vers l'intérieur accrue sur la partie postérieure du fourreau (34).

6. Procédé selon la revendication 5, comprenant l'étape consistant à solliciter radialement vers l'intérieur le manchon (28) sur le fourreau (26) pour assurer une résistance à un déplacement inintentionnel par suite de vibrations.
